# EUROPÄISCHE PATENTANMELDUNG

(11) **EP 0 978 734 A2**
(43) Veröffentlichungstag der Anmeldung: **09.02.2000**
(21) Anmeldenummer: 99113965.0
(22) Anmeldetag: 17.07.1999
(51) Int. Cl.: G01V 3/10

(54) **Vorrichtung zur Erkennung von metallischen Gegenständen**

(30) Priorität: 05.08.1998 DE 29813997 U
(71) Anmelder: MAIER, Hans-Jürgen, D-72072 Tübingen 1 (DE)
(72) Erfinder: Die Erfindernennung liegt noch nicht vor
(74) Vertreter: Möbus, Daniela, Dr.-Ing.

(57) **Zusammenfassung**

Eine Vorrichtung zur Erkennung von metallischen Gegenständen im Fuß- und Unterschenkelbereich von bei Personenkontrollen zu untersuchenden Personen, wobei die Vorrichtung eine im oder auf dem Boden (5) angeordnete Metalldetektoranordnung (1a, 1b), die mit einer Steuervorrichtung (3) und einer Anzeigevorrichtung (2) verbunden ist, umfasst.

## Beschreibung

Die Erfindung betrifft eine Vorrichtung zur Erkennung von metallischen Gegenständen bei Personenkontrollen.

Schon seit längerer Zeit werden aus Sicherheitsgründen, beispielsweise auf Flughäfen oder bei Großveranstaltungen, wie beispielsweise Popkonzerten, Personen vor dem Betreten des Flugzeugs oder am Eingang des Veranstaltungsgeländes auf metallische Gegenstände, wie Schusswaffen oder Messer, durchsucht. Dazu gibt es verschiedene Vorrichtungen. Es kann beispielsweise eine Messvorrichtung in Form eines "Türrahmens", der mit Metalldetektoren versehen ist, verwendet werden. Die zu untersuchenden Personen müssen durch diesen Rahmen hindurchgehen. Es erfolgt eine akustische und/oder optische Anzeige, wenn die Metalldetektoren im Rahmen bei der hindurchgehenden Person einen metallischen Gegenstand erkennen. Dies stellt jedoch ein sehr grobes Verfahren dar, sodass häufig noch eine Nachkontrolle erfolgen muss. Dazu werden beispielsweise Handsonden verwendet, die am Körper entlanggeführt werden.

Es hat sich herausgestellt, dass in letzter Zeit häufiger metallische Gegenstände, wie Schusswaffen, Teile von Schusswaffen oder Messer, im unteren Körperbereich versteckt wurden. Diese Gegenstände wurden beispielsweise mit Klebeband am Unterschenkel befestigt oder in die dicken Sohlen von heute stark in Mode befindlichen Plateau-Schuhen eingefügt.

Um auch die im unteren Körperbereich versteckten Gegenstände bei den Personenkontrollen zu finden, werden immer häufiger zusätzliche Kontrollen im Fuß- und Unterschenkelbereich durchgeführt. Sowohl für die zu untersuchende Person als auch für die kontrollierende Person stellt dies eine zeitraubende und oft auch unangenehme Prozedur dar, bei der wechselseitig der linke und rechte Fuß der zu kontrollierenden Person auf einem Schemel abgesetzt und dann mit einer Handsonde auf Metallteile überprüft wird. Mitunter müssen auch die Schuhe ausgezogen werden, weil anhand des Signals der Handsonde nicht eindeutig festgestellt werden kann, ob es sich nur um einen kleinen unkritischen metallischen Gegenstand oder um einen gefährlichen Gegenstand handelt. Etwaige "Schweißfüße" sind dabei sowohl für die zu untersuchende Person als auch für die kontrollierende Person sehr unangenehm. Außerdem verzögern diese zusätzlich notwendigen intensiven Kontrollen die zügige Abfertigung der zu untersuchenden Personen.

Der Erfindung liegt die Aufgabe zugrunde, eine Vorrichtung zur Erkennung von metallischen Gegenständen im Fuß- und Unterschenkelbereich von bei Personenkontrollen zu untersuchenden Personen anzugeben, bei der die metallischen Gegenstände auf schnelle und zuverlässige Weise erkannt werden können.

Die gestellte Aufgabe wird mit der im Hauptanspruch genannten Vorrichtung zur Erkennung von metallischen Gegenständen erfindungsgemäß durch die im kennzeichnenden Teil des Hauptanspruches aufgeführten Merkmale gelöst. Die Unteransprüche geben bevorzugte Weiterbildungen an.

Bei der erfindungsgemäßen Vorrichtung zur Erkennung von metallischen Gegenständen im Fuß- und Unterschenkelbereich von bei Personenkontrollen zu untersuchenden Personen wird eine flache Metalldetektoranordnung, die aus einem oder mehreren flachen Metalldetektoren besteht, im Boden eingelassen. Die Metalldetektoranordnung kann mit üblichen Bodenbelägen, wie beispielsweise dünnen Gummi- oder Teppichmatten abgedeckt werden, und ist somit für die zu untersuchende Person nicht sichtbar. Statt die Metalldetektoranordnung im Boden einzulassen, kann sie auch auf der Bodenoberfläche befestigt werden, wobei sie durch dünne Rampen davor und dahinter geschützt wird. Auch hier kann eine zusätzliche Abdeckung der Metalldetektoranordnung mit üblichen Bodenbelägen erfolgen.

Die zu untersuchende Person geht dann über die Metalldetektoranordnung hinweg. Beim Überschreiten der Metalldetektoranordnung findet automatisch eine Kontrolle des Fuß- und Unterschenkelbereiches der zu untersuchenden Person statt. Akustisch und/oder optisch wird der kontrollierenden Person angezeigt, wenn ein metallischer Gegenstand erkannt wurde.

Die Metalldetektoranordnung kann mit einer integrierten oder getrennten Empfindlichkeitseinstellung ausgestattet sein, sodass beispielsweise die Erkennung von unbedeutenden kleinen Metallteilen im Fuß- und Unterschenkelbereich der zu untersuchenden Person, wie beispielsweise Fußkettchen oder Verschluss-Schnallen an den Schuhen, unterdrückt werden kann.

Zur separaten Untersuchung der Unterschenkel können auch zusätzlich seitliche, bis in den Kniebereich reichende, mit Metalldetektoren versehene Vorrichtungsteile vorgesehen sein. Die Metalldetektoren können dabei mit einer relativ hohen Empfindlichkeit ausgestattet werden, da am Unterschenkel in der Regel keine Metallgegenstände in Form von Schmuck oder Bekleidungsteilen getragen werden. Zweckmäßigerweise können die Zusatz-Metalldetektoren mit gesonderten optischen und/oder akustischen Anzeigeeinrichtungen versehen sein, sodass mit der Vorrichtung genau detektiert werden kann, ob im Fußbereich oder im Unterschenkelbereich Metallgegenstände erkannt wurden.

Die Anzeigevorrichtung kann digital oder analog sein und auch die Angabe der Signalstärke erlauben. Damit ist es dem Kontrolleur möglich, festzustellen, ob die ermittelte Metallmenge der gegebenenfalls sichtbaren Metallmenge beispielsweise in Form von Schnallen an Schuhen entspricht oder ob noch verborgene Metallgegenstände vorhanden sein müssen.

Die erfindungsgemäße Vorrichtung ermöglicht eine schnelle und zuverlässige Erkennung von metallischen Gegenständen, die unabhängig von der momentanen Stimmungslage oder dem "Abfertigungsstress" der kontrollierenden Person ist.

Ein Ausführungsbeispiel einer erfindungsgemäß ausgebildeten Vorrichtung zur Erkennung von metallischen Gegenständen im Fuß- und Unterschenkelbereich von bei Personenkontrollen zu untersuchenden Personen wird nachfolgend anhand der beiliegenden Zeichnung erläutert.

Es zeigen:
- Fig. 1: eine schematische Ansicht einer ersten erfindungsgemäßen Vorrichtung;
- Fig. 2: eine schematische Ansicht einer zweiten erfindungsgemäßen Vorrichtung.

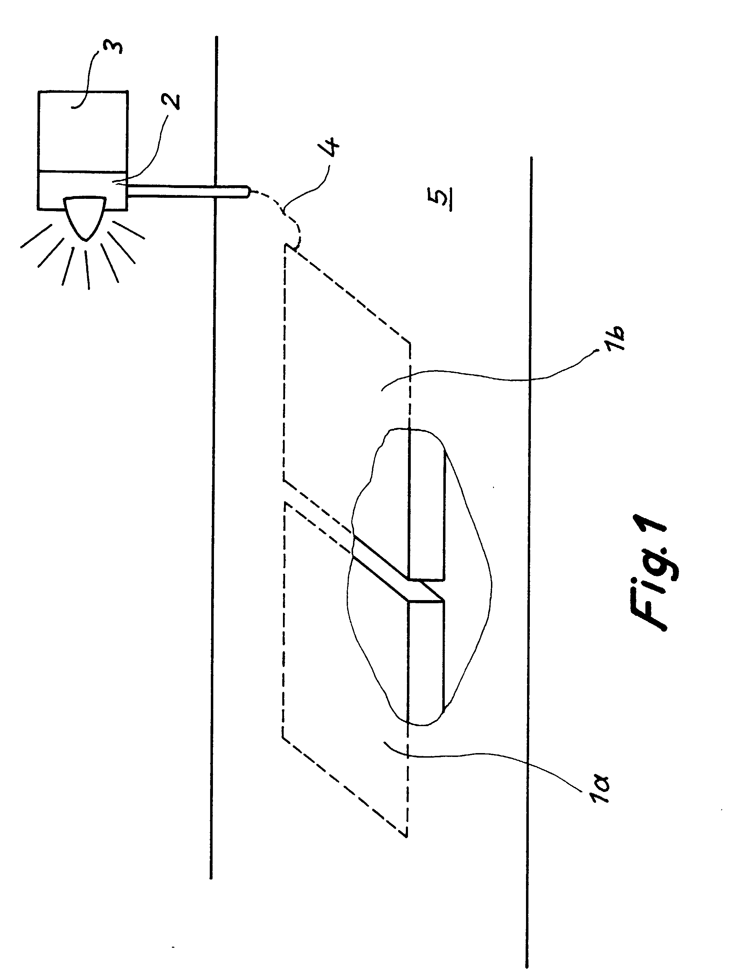

Die Vorrichtung aus Fig. 1 besteht aus einer Metalldetektoranordnung, die in diesem Fall aus zwei einzelnen Metalldetektoren 1a und 1b besteht. Prinzipiell können aber je nach Anwendungsfall beliebig viele Metalldetektoren vorgesehen werden. Die Metalldetektoranordnung ist bei diesem Ausführungsbeispiel im Boden 5 eingelassen. Alternativ könnte sie auch auf der Bodenoberfläche angeordnet werden. Von der Metalldetektoranordnung führt ein Verbindungskabel 4 zu einer Steuervorrichtung 3, die mit einer Anzeigevorrichtung 2 verbunden ist. In der Steuervorrichtung 3 wird das von der Metalldetektoranordnung kommende Signal verarbeitet und über die Anzeigevorrichtung 2 optisch und/oder akustisch angezeigt. Außerdem kann über die Steuervorrichtung 3 eine Empfindlichkeitseinstellung erfolgen.

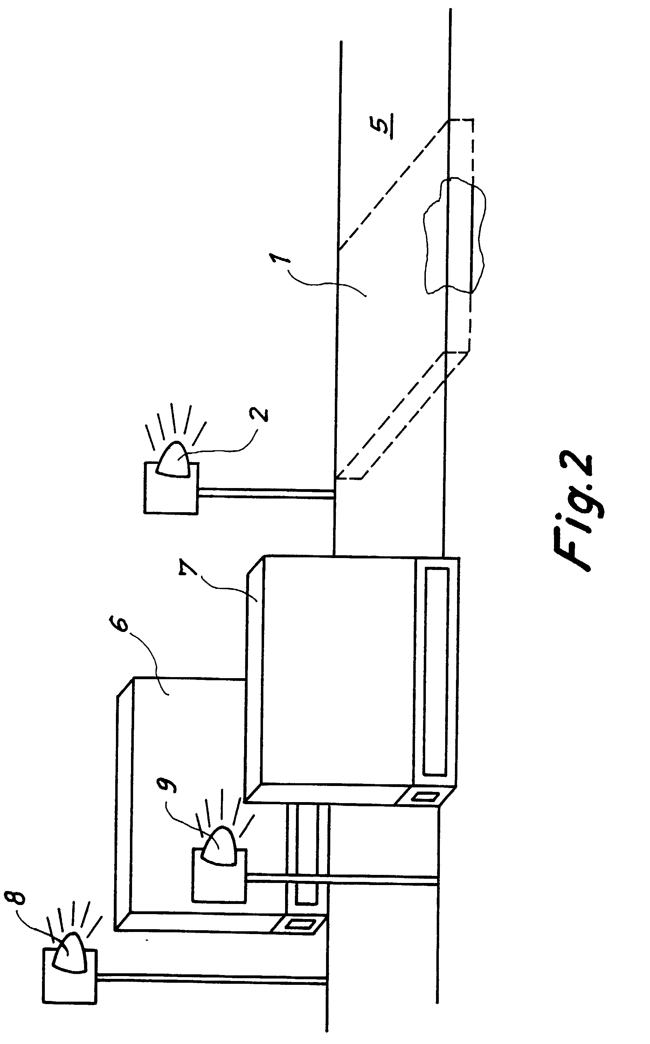

Bei der Vorrichtung nach Fig. 2 ist neben der Metalldetektoranordnung 1 im Fußboden eine zusätzliche Metalldetektoranordnung in zwei seitlichen, bis in den Kniebereich einer zu kontrollierenden Person reichenden Vorrichtungsteilen 6 und 7 vorgesehen. Die Metalldetektoren sind mit separaten Anzeigevorrichtungen 8 und 9 verbunden. Zusammen mit der Metalldetektoranordnung 1 lassen sich somit Metallteile im Fußbereich und im Unterschenkelbereich genau lokalisieren.

## Patentansprüche

1. Vorrichtung zur Erkennung von metallischen Gegenständen im Fuß- und Unterschenkelbereich von bei Personenkontrollen zu untersuchenden Personen, dadurch gekennzeichnet, dass die Vorrichtung eine im oder auf dem Boden (5) angeordnete Metalldetektoranordnung (1a, 1b), die mit einer Steuervorrichtung (3) und einer Anzeigevorrichtung (2) verbunden ist, umfasst.

2. Vorrichtung nach Anspruch 1, dadurch gekennzeichnet, dass die Metalldetektoranordnung (1a, 1b) aus einem oder mehreren Metalldetektoren besteht.

3. Vorrichtung nach Anspruch 1 oder 2, dadurch gekennzeichnet, dass die Metalldetektoranordnung (1a, 1b) durch einen Bodenbelag abgedeckt ist.

4. Vorrichtung nach einem der vorhergehenden Ansprüche, dadurch gekennzeichnet, dass die Verbindung zwischen der Metalldetektoranordnung (1a, 1b) und der Steuervorrichtung (3) und der Anzeigevorrichtung (2) aus einem elektrischen Kabel (4) besteht.

5. Vorrichtung nach einem der vorhergehenden Ansprüche, dadurch gekennzeichnet, dass die Steuervorrichtung (3) eine Vorrichtung zum Einstellen der Ansprechempfindlichkeit der Metalldetektoranordnung umfasst.

6. Vorrichtung nach einem der vorhergehenden Ansprüche, dadurch gekennzeichnet, dass die Anzeigevorrichtung (2), einen optischen und/oder einen akustischen Anzeigevorrichtungsteil umfasst.

7. Vorrichtung nach einem der vorhergehenden Ansprüche, dadurch gekennzeichnet, dass zusätzlich seitliche, bis in den Kniebereich reichende, mit Metalldetektoren versehene Vorrichtungsteile (6, 7) vorgesehen sind.

8. Vorrichtung nach Anspruch 8, dadurch gekennzeichnet, dass die Metalldetektoren der Vorrichtungsteile (6, 7) eine relativ hohe Empfindlichkeit aufweisen.

9. Vorrichtung nach Anspruch 7 oder 8, dadurch gekennzeichnet, dass die Metalldetektoren der Vorrichtungsteile (6, 7) mit gesonderten optischen und/oder elektrischen Anzeigevorrichtungen (8, 9) verbunden sind.
